Europäisches Patentamt

European Patent Office

Office européen des brevets

(19)

(11) Veröffentlichungsnummer: **0 191 278**
A2

# (12) EUROPÄISCHE PATENTANMELDUNG

(21) Anmeldenummer: 85890229.9

(22) Anmeldetag: 23.09.85

(51) Int. Cl.⁴: **C 04 B 18/14,** C 04 B 14/30,
C 04 B 18/04, C 09 C 1/24,
C 09 C 3/04

(30) Priorität: 25.09.84 AT 3033/84

(43) Veröffentlichungstag der Anmeldung: 20.08.86
Patentblatt 86/34

(84) Benannte Vertragsstaaten: BE CH DE FR GB IT LI NL SE

(71) Anmelder: ALCHEM Metallchemie
Produktionsges.m.b.H., Doppl 10, A-4121 Altenfelden
(AT)

(72) Erfinder: Kneidinger, Walter, Doppl 10,
A-4121 Altenfelden (AT)

(54) Farbpräparation, enthaltend eines oder mehrere farbgebende anorganische Metalloxide, für die Massefärbung von Baustoffen.

(57) Die Erfindung betrifft eine Farbpräparation, enthaltend eines oder mehrere farbgebende anorganische Metalloxide, für die Massefärbung von Baustoffen, wie Beton, Mörtel, Bitumenmassen und dgl. Das Wesen der Erfindung liegt darin, daß die Farbpräparation aus einem schüttfähigen Feuchtgranulat aus den genannten Metalloxiden mit einem Wassergehalt von 5 bis 50 Massen-%, bezogen auf das Granulat, besteht.

EP 0 191 278 A2

Vorliegende Erfindung bezieht sich auf eine Farbpräparation mit einem Gehalt an farbgebenden anorganischen Metalloxiden für die Massefärbung von Baustoffen, wie Beton, Mörtel, Bitumenmassen u.dgl.

Das Durchfärben von Beton, Mörtel, Bitumen u.dgl. Baumaterialien ist eine Gestaltungsmöglichkeit, die immer mehr zunimmt. Gründe dafür finden sich im gesteigerten Umweltbewustsein, welches die farbliche Anpassung an die Umgebung und den Schmuck von Bauflächen verlangt, weiters kommt Massenfärbung als Ordnungsmerkmal und Verkaufshilfe von an sich unbunten Massenbaustoffen vor allem dort in Frage, wo nachträglich oberflächliche Farbbehandlung aus Gründen mechanischer Beanspruchung (z.B. Gewegplatten), aber auch aus Kostengründen (Gerüstung, Erhaltungsaufwand) ausscheidet.

Das Durchfärben von kalk-, zement-, kunstharz- oder bitimengebundenen, vorwiegend mit mineralischen Zuschlägen gefüllten Baustoffen mit anorganischen farbgebenden Metalloxiden, sowie auch Ruß, ist allgemein bekannt, wobei vorwiegend Metalloxide in Pulverform verwendet werden. Weiters ist es bekannt, solche Metalloxide und u.a. auch den bei der Bauxitverarbeitung anfallenden Rotschlamm für die Färbung von gebrannten Baustoffen zu verwenden.

So wird z.B. in der DE-AS 2 435 234 vorgeschlagen, feuchten alkalischen Rotschlamm mit Oxalsäure als viskositätserniedrigendes Mittel und weiteren an sich bekannten Verflüssigungsmitteln zu versetzen und zu einem Granulat sprühzutrocknen. Diese Trockengranulate werden z.B. in der Keramikindustrie verwendet.

Für die Herstellung von Ziegeln ist es weiters durch die DE-OS 2 150 677 bekannt, filterfeuchten Rotschlamm vor der Vermischung mit Ton mit wasserbindenden anorganischen und/oder organischen Stoffen zu versetzen, das Ton-Rotschlammgemisch zu Ziegelrohlingen zu formen und diese schließlich zu Ziegeln zu brennen. Dabei kann der Rotschlamm beispielsweise im Gemisch mit Flugasche eingesetzt werden.

Die DE-OS 1 571 602 beschreibt ein Verfahren zur Herstellung von Granulaten aus Rotschlamm als Zuschlagstoff für die Bauindistrie, welches darin bestent, daß dem feuchten Rotschlamm Tonmehl sowie Blähstoffe in Staubkorngröße zugegeben werden, so daß eine formbare Masse entsteht, die in Teilstücke, z.B. in Zylinder- oder Kugelform, gebracht werden kann, worauf die Teilstücke zu einem geblähten Tonkörper gebrannt werden.

Der DDR-PS 112 584 ist ein Verfahren zur Herstellung von Werkstoffen mit glasartiger Phase, vorzugsweise für die Bauindustrie, unter Verwendung des bei der Tonerdeproduktion nach dem Bayer-Verfahren anfallenden Rotschlammes und von Siliziumdioxid zu entnehmen. Dieses Verfahren besteht darin, daß das gesamte Siliziumdioxid und/oder siliziumdioxidhaltige Materialien oder ein Teil davon in vollständig oder teilweise mechanisch aktivierter Form mit dem Rotschlamm gemischt, gegebenenfalls mit wässerigen Lösungen von Natriumhydroxid und/oder mit Alkalihydroxiden und Alkalisalzen anorganischer Säuren, Erdalkalioxiden, Erdalkalihydroxiden und Erdalkalisalzen anorganischer Säuren, sowie deren Gemischen nacheinander vermischt bzw. sämtliche Komponenten von vornherein gemeinsam intensiv gemischt, diese Mischungen gegebenenfalls getrocknet und/oder zu Granulaten, Briketts, Pillen, Pellets, Formkörpern oder einer preßfähigen bzw. strangpreßfähigen Paste oder einer vergießbaren, zersprühbaren oder verspritzbaren Schlempe aufgearbeitet und einer Temperaturbehandlung, vorzugsweise zwischen 600 und 1200°C ausgesetzt werden.

Ein Teil dieser bekannten Verfahren umfaßt die Herstellung eines feuchten körnigen Produktes als Zwischenstufe für die Verwendung bei der Ziegelherstellung, wobei aber in jedem Falle eine Brennstufe vorgesehen ist, um das feuchte körnige Produkt in ein gebranntes Produkt oder, im Gemisch mit den Ziegelrohstoffen, in den gebrannten Ziegel überzuführen.

Die Erfindung bezweckt die Durchfärbung von Baumaterialien, wie Beton, Mörtel, Birumen u.dgl., mittels einer Farbpräparation, die anorganische farbgebende Metalloxide enthält.

Der bekannte Einsatz von trockenen Oxidpulvern zum Durchfärben
von Baumaterialien der vorgenannten Art setzt aufwendige
Produktionsverfahren voraus, da die fast durchwegs in Suspension
bzw. als Filterkuchen anfallenden Oxide getrocknet werden
müssen; sie agglomerieren dabei und sind nur mit sehr aufwendigen
Mahlverfahren tstsächlich wieder auf Primärkorngröße aufzulösen.
Ein wesentlicher Anteil des Produktionsverfahrens entfällt
auf diesen Teil der Oxiderzeugung.

Beim Einsatz von flüssigen Farbpräparationen bzw. Schlämmen
entsteht das Problem aufwendiger verlorener Transportgebinde
oder eines Leergebinderücktransportes sowie des Transportes
von großen Mengen Wasser vom Oxidpigmenthersteller zum Verwender.

Werden die Oxide auf eine Restfeuchte von unter 5% getrocknet und nicht fein gemahlen, sondern nur granuliert,
bilden sich, abhängig von den wasserlöslichen Verunreinigungen
und der Primärkorngröße und -form, harte Agglomerate, welche
auf Kosten der Ergiebigkeit im Betonmischprozeß oder durch
einfache Aufschlämmung nicht ausreichend aufgelöst werden.

Ziel der vorliegenden Erfindung ist die Schaffung einer
Farbpräparation, bei deren Verwdndung keine Staub- oder
Schmutzbelästigung auftritt und welche die Nachteile der bisher
bekannten flüssigen bis pastenförmigen Produkte und der
trockenen pulverförmigen Produkte bei der Durchfärbung von
Baumaterialien der vorgenannten Art vermeidet.

Demnach betrifft die Erfindung eine Farbpräparation, enthaltend eines oder mehrere farbgebende anorganische Metalloxide,
für die Massenfärbung von Baustoffen, wie Beton, Mörtel, Bitumenmassen u.dgl., welche dadurch gekennzeichnet ist, daß
sie aus einem schüttfähigen Feuchtgranulat aus den genannten
Metalloxiden mit einem Wassergehalt von 5 bis 50 Massen-%,
bezogen auf die Masse des Granulats besteht.

Die Farbpräparation kann vorzugsweise hergestellt werden,
indem man eine wässerige Aufschlämmung wenigstens eines farbgebenden anorganischen Metalloxids zu einer Masse mit pastenförmiger Konsistenz mit einem Wassergehalt von 5 bis 50 Massen-%
entwässert und/oder durch Vermischen mit trockenem Metalloxidpulver und/oder Pulvern von inerten Materialien auf einen solchen
Wassergehalt bringt, die Masse granuliert und das erhaltene
Granulat gegebenenfalls mit trockenen Pulvern der vorgenannten
Art und/oder mit Pulvern von Substanzen, die bei Berührung mit Wasser härten, bestreut.

Offensichtlich auf Grund einer Strukturviskosität der feuchten Massen von Metalloxiden haben sich dort, wo mit möglichst geringen Zugaben an Trennmittel, d.s. die vorgenannten, der feuchten Metalloxidmasse zuzusetzenden Trockenpulver, das Auslangen gefunden werden soll, Granulierverfahren als besonders vorteilhaft erwiesen, welche weitgehend auf Druck- und Scherwirkung verzichten und bei denen die Partikelform durch Schneid- oder Schälwirkung ohne Materialverformung erzielt wird. Die geforderte Strukturfestigkeit und damit Schütt- und Rieselfähigkeit des Granulats kann unter dieser Voraussetzung bei gleicher Granulatfeuchte mit geringerer Pulverzugabe erhalten werden. Es ist offensichtlich, daß auch die Verarbeitungstemperatur die Strukturviskosität beeinflußt.

Mit den erfindungsgemäßen Farbpräparationen kann man die gewünschten Farbeffekte in den eingangs genannten Baumaterialien (Beton, Mörtel, Bitumen u.dgl.)durch Mischen ein- oder verschiedenfarbiger Granulate erzielen, wobei das Trennmittel vorteilhaft ebenfalls als Farbspender einbezogen werden kann.

Vorzugsweise liegt die Teilchengröße der Granulatteilchen der erfindungsgemäßen Farbpräparation im Bereich zwischen 1 und 10 mm, da größere Granulatkörnungen unverhältnismäßig lange Mischzeiten bei der Aufschlämmung im Betonmischer oder Zementleimbereiter voraussetzen, kleinere Körnungen den Trennmittelbedarf erhöhen und durch das Trennmittel auch zu stark abgetrocknet werden können, was wiederum zu schlecht zerteilbaren Pigmentaggregaten auf Kosten der Ergiebigkeit führt.

Bei pulverförmigen Trennmitteln haben sich solche als vorteilhaft herausgestellt, deren Primärkorngröße über der Kornfeinheit im Feuchtgranulat liegt.

Die für die erfindungsgemäßen Farbpräparationen verwendeten Metalloxide können solche sein, welche auch in der Mal- und Anstrichtechnik eingesetzt werden. Die Farbpräparation kann das Metalloxid oder die Metalloxide allein oder im Gemisch mit Streckmitteln, Verunreinigungen, wie sie insbesondere bei Oxiden, die als industrielle Nebenprodukte anfallen, vorhanden sind, enthalten.

Auf Grund ihrer Billigkeit, Farbechtheit und Witterungsbeständigkeit ist die Verwdndung von Eisenoxiden, gegebenenfalls im Gemisch mit anderen farbgebenden anorganischen
Metaboxiden, von besonderem Vorteil. Andere Farboxide werden
vor allem in solchen Farbpräparationen eingesetzt, wo das Farbspektrum der Eisenoxide den Farbwunsch nicht abdeckt. Auch
die Verwdndung von Ruß als zusätzliches Pigment ist möglich
und kann im Gemisch mit den Eisenoxidpigmenten Farbpräparationen
ergeben, die zu interessanten Farbeffekten führen.

Bei der fakultativen Maßnahme des Bestreuens des erhaltenen
Granulats mit trockenen Pulvern können auch solche Pulver eingesetzt werden, die bei Berührung mit Wasser härten. Ein Beispiel eines solchen Pulvers ist gebrannter Gips, der bei Berührung mit der feuchten Granulatoberfläche erhärtet und die
Strukturfestigkeit des Granulats erhöht.

Eine andere Möglichkeit, die Festigkeit des Granulats zu
erhöhen, besteht darin, es mit Lösungen von Wasserglas oder
Kunstharz zu bestreuen.

Die im Feuchtgranulat verwendeten Metalloxide können
synthetische Produkte, Naturprodukte oder das Oxid enthaltende
industrielle Neben- oder Abfallprodukte sein. Ein solches
Abfallprodukt mit farbgebenden Eigenschaften ist beispielsweise der Rotschlamm, ein tonhaltiges, bei der Tonerdeproduktion
anfallendes Material. Der Wassergehalt des Rotschlammes differiert mit der Haldenfeuchte und liegt gewöhnlich zwischen
25 und 45%. In diesem Zustand kann das Produkt im Farbeinsatz
nicht manipuliert und dosiert werden, da es, besonders unter
Stapelgewicht, zu einem Klotz verklumpt und somit die zur
Dosierung und gleichmäßigen Einarbeitung notwendige Schütt-
und Rieselfähigkeit nicht besitzt. Im Falle einer Trocknung
bilden sich offensichtlich auf Grund der aus der Lösung
trocknenden Carbonate harte Agglomerate, welche eine Auflösung
in Primärkorngröße auf Kosten der spezifischen Oberfläche
und damit der Ergiebigkeit mit wirtschaftlichen Mitteln
kaum mehr zulassen; andererseits läßt sich mit Rotschlamm als
Farbstoffbasis mit Zusatz anderer pulverförmiger Farbkomponenten
bzw. -pigmenten ein breites Farbspektrum vom orangen Gelb
über Ocker und Rot bis Dunkelbraun erreichen.

Das in der vorgenannten Weise auf einen Wassergehalt von
5 - 50 Massen-% gebrachte organische Metalloxid wird vorzugsweise  als  Granulat in Würstchen-, Tabletten-, Pellet-, Knollen- oder Schuppenform oder einer ähnlichen anderen
Form verwendet. Das gegebenenfalls auf das Granulat aufgestreute Pulver fungiert als Trennmittel der Granulatteilchen untereinander und erhöht den Trockengehalt zumindest an der Oberfläche des Granulats, abhängig von der
Granulatform und von den physikalischen Eigenschaften des
Metalloxids und des Trennmittels, so weit, daß das Pulvergranulatgemenge auch in Großbehältern oder unter Stapeldruck rieselfähig bzw. schüttfähig bleibt.

Eine derartige Farbpräparation hat den Vorteil, daß
nur ein Bruchteil des Pigments getrocknet und gemahlen
werden muß. Der Transportaufwand für den Restwassergehalt
ist bedeutend geringer als bei flüssigen Präparationen
und es genügen einfache feuchtigkeitsfeste Verpackungen
(Plastiksäcke, Textilcontainer) für den Versand und die
Lagerung des Produktes. Da Farbpräparationen sich in dieser
Form bedeutend einfacher bis auf Primärkorngröße wieder
auflösen lassen als die einen normalen Mahlvorgang überstandenen Agglomerate von getrocknetem Pigment, kann am
Ort des Verbrauchs das Granulat mit einfachen Rührwerkzeugen
bedeutend besser aufgeschlämmt werden. Dies zeigt sich
daran, daß Suspensionen, aus ungetrockneten Pigmenten angerührt, viel weniger zum Absetzen neigen als Suspensionen
aus demselben, aber getrockneten und gemahlenen Pigment.

Es hat sich gezeigt, daß auch das Zuschlagmaterial
einer Baustoffmischung so gute Dispergiereigenschaften aufweist, daß die erfindungsgemäß verwendete granulatförmige
Farbstoffpräparation in Lieferform der Mischung zugesetzt
werden kann und mit guten Ergebnissen eingearbeitet wird.
Dieses Auflösen des Granulats wird durch bereits eingearbeitete Zusätze, wie Dispergiermittel, Porenbildner, Verflüssiger u.dgl., unterstützt.

Die Verwendung der schüttfähigen Feuchtgranulate ist
auch bei wasserunverträglichen Bindemitteln dann möglich, wenn
sie dem Zuschlagmaterial zugemischt wird, welches, etwa bei
Bitumenmischungen, vor der Bindemittelzugabe erhitzt und
intensiv gemischt wird. Das Wasser der Präparation wird
dann zeitgerecht weggetrocknet und das Granulatkorn wie in einer Mühle durch das Zuschlagmaterial gemahlen. Ein in diesem Zusammenhang weiteres mögliches Verwendungsgebiet der Farbpräparationen liegt bei Schwefelbeton.

Die Erfindung wird durch die folgenden Beispiele näher erläutert.

Beispiel 1: In einer Schneidmühle mit horizontal rotierendem Teller einer Stärke von 0,5 mm und einer Schneidlochung von 6 mm Durchmesser und 25 mm Teilung wird Rotschlamm mit 30% Wassergehalt aufgebracht. Das Material läuft gegen eine Staueinrichtung und wird ohne Preßdruck durch die Schneidvorrichtung zu Würstchen von halbkreis- bis sichelförmigem Querschnitt geformt. Unter dem Schneidteller wird getrocknetes gemahlenes gelbstichiges Eisenoxidrot in einer Menge von 20% auf das Feuchtgranulat durch Einstreuen untergemischt. Die so entstandene Farbpräparation wird dem Betonmischgut vor der Wasserzugabe mit 3 bis 10%, bezogen auf das Zementgewicht, zudosiert. Man erhält einen Beton von Tonziegelfarbe.

Beispiel 2: Wie in Beispiel 1 beschrieben wird unter dem Schneidteller 98 %iges pulverförmiges Eisenoxidrot aus dem Anfall in sogenahnten "Ruthner-Anlagen" zur Salzregenerierung in den Bandbeizen von Stahlwerken eingemischt. Das Gemenge wird sodann auf einem Sieb mit 2 mm Lochung abgesiebt. Es verbleiben etwa 10% des Pulvers als Trennmittel an den Granulatwürstchen, der Rest kann neuerlich eingesetzt werden. Die Farbstoffpräparation ergibt im Betonmischer bei einer Dosierungshöhe ab 0,5% hellbeige bis tonfarbene Betonprodukte.

Beispiel 3: Die Farbstoffpräparation gemäß Beispiel 2 wird dem Zuschlagmaterial einer Bitumenmischung in der Heiztrommel als ganzer oder teilweiser Ersatz des Füllers (5 - 20% auf Gesamtmenge) zugesetzt. Man erhält einen braunen bis rotbraunen Bitumenbelag.

Beispiel 4: Der Filterkuchen eines Eisenoxidgelbpigments mit ausgeprägter Nadelstruktur und einem Wassergehalt von 60% wird wie in Beispiel 1 granuliert, jedoch unter Zumischung von 20 Masse-% gebranntem schnellbindenden Gips. Das Gemenge wird auf einem Förderband in Einlagen-Stärke so lange
transportiert, bis der Gips weitgehend abgebunden hat.
Die Farbpräparation wird in den in Beispiel 1 angewendeten
Mengen dem Betonmischer zudosiert. Man erhält gelbe Betonprodukte.

Beispiel 6: Eisenoxidgelbpigmentfilterkuchen enthaltend
ein Dispergierhilfsmittel wird auf 20% Wassergehalt getrokcnet und anschließend granuliert. Man erhält gelbgefärbte Betonprodukte.

Beispiel 7: Durch eine Röhrenfilterpresse auf 15% Wassergehalt entwässerter Filterschlamm aus der Naßentstaubung
von LD-Stahlwerken (Konvertern) enthaltend ca. 75% $Fe_2O_3$
wird durch eine Hammermühle gemahlen. Man erhält ein feuchtes
schüttfähiges sandförmiges Granulat mit braunem Farbeffekt
in Beton.

0191278

Patentanspruch.

Farbpräparation, enthaltend eines oder mehrere farbgebende anorganische Metalloxide, für die Massenfärbung von
Baustoffen, wie Beton, Mörtel, Bitumenmassen u.dgl.,
dadurch gekennzeichnet, daß sie aus einem schüttfähigen Feuchtgranulat aus den genannten Metalloxiden mit einem Wasserdie Masse des        es
gehalt von 5 bis 50 Massen-%,bezogen auf das Granulat, besteht.